# EUROPEAN PATENT APPLICATION

(11) **EP 0 949 079 A1**
(43) Date of publication of application: **13.10.1999**
(21) Application number: 99105199.6
(22) Date of filing: 01.04.1999
(51) Int. Cl.: B41J 2/16

(54) **Method of producing an ink jet head**

(30) Priority: 02.04.1998 JP 8997098
(71) Applicant: NEC CORPORATION, Tokyo (JP)
(72) Inventor: Kimura, Shigeru, Minato-ku, Tokyo (JP)
(74) Representative: VOSSIUS & PARTNER

(57) **Abstract**

A method of producing an ink jet head is disclosed. The ink jet head includes a substrate formed with an ink pool (1) in one major surface thereof, a plurality of pressure chambers (2) in the other major surface thereof, a plurality of feed holes (5) respectively extending from the ink pool (4) to the pressure chambers (2), and a plurality of through passageways (17) respectively extending from the pressure chambers throughout the substrate. The methods includes the steps of etching a single photosensitive glass ceramics substrate to thereby form the pressure chambers, feed holes and through passageways, and heating the substrate to transform photosensitive glass ceramics of the substrate to ceramics. A plurality of nozzles (15) may also be formed in the substrate.

## Description

The present invention relates to an ink jet head for an ink jet printer and more particularly to an ink jet head configured to distribute ink from a single ink pool to a plurality of pressure chambers via respective passageways and a method of producing the same.

Generally, an ink jet head for in an ink jet printer includes three-dimensional ink passageways extending from a single ink pool to nozzles and pressure chambers densely arranged at a preselected pitch. It has been customary to form the ink passageways by positioning and stacking a plurality of substrates formed with grooves and holes and then adhering them together. For example, Japanese Patent Laid-Open Publication Nos. 7-156398 (Prior Art 1 hereinafter) and 7-246701 (Prior Art 2 hereinafter) each discloses a particular ink jet head

The problem with Prior Art 1 is as follows. Unless positional deviation apt to occur during the stacking of substrates, irregularity in positional accuracy and deformation ascribable to baking are strictly controlled, walls, particularly those adjoining nozzles, are stepped and effect the ejection characteristic relating to ink drops, Specifically, the stepped walls cause each of the nozzles to eject an ink drop at a different speed, renders the size of ink drops irregular, and disturbs the frequency to follow.

Prior Art 2 has a problem that the substrates are dislocated relative to each other. This, coupled with the fact that adhesive bulges out from the substrates and fails to fully adhere the substrates, causes the walls of nozzles to be stepped, also resulting in low yield and high cost.

Further, irregularities in the dimension and positional accuracy of the pressure chambers and those of the feed holes have critical influence on the specific period and ink refilling characteristic of the head.

Moreover, it is difficult to form nozzles as fine as 20 µm to 30 µm in a ceramic substrate. In addition, the ink pool or similar portion having a broad area is apt to deform during baking. In light of this, an ink pool forming substrate and a feed hole forming substrate may be formed of metal while a pressure chamber forming substrate may be formed of ceramics. This, however, increases the number of parts constituting the head.

Technologies relating to the present invention are also disclosed in, e.g., Japanese Patent Laid-Open Publication No. 8-267748.

It is an object of the present invention to provide an improved method of producing an ink jet head.

This object is achieved with the features of the claims It is an advantage of the present invention to provide a method capable of producing an ink jet head at low cost with high yield without resorting to the accurate adhesion of a plurality of substrates.

A method of producing an ink jet head of the present invention is applicable to an ink jet head of the type including substrate formed with an ink pool in one major surfacc thereof, a plurality of pressure chambers in the other major surface thereof, a plurality of feed holes respectively extending from the ink pool to the pressure chambers, and a plurality of through passageways respectively extending from the pressure chambers throughout the substrate. The methods includes the steps of etching a single photosensitive glass ceramics substrate to thereby form the pressure chambers, feed holes and through passageways, and heating the substrate to transform photosensitive glass ceramics of the substrate to ceramics. A plurality of nozzles may also be formed in the substrate.

The above and other objects, features and advantages of the prcsent invention will become more apparent from the following detailed description taken with the accompanying drawings in which:
FIG. 1 is a sectional view showing a conventional ink jet head;
FIG. 2 is a sectional view demonstrating a method of producing the head shown in FIG. 1;
FIG. 3 is a sectional view showing another conventional ink jet head;
FIG. 4 is an exploded perspective view showing an ink jet head embodying the present invention;
FIGS. 5-7 are views each showing a specific positional relation between an ink pool, pressure chambers, through passageways and feed holes formed in a head chip included in the illustrative embodiment;
FIGS. 8A-8C are sectional views demonstrating a method of producing the head shown in FIG. 4;
FIG. 9 is a sectional view showing an alternative embodiment of the ink jet head in accordance with present invention; and
FIGS. 10A-10D are sectional views representative of a procedure for producing the head shown in FIG. 9.

To better understand the present invention, reference will be made to prior Art 1 and Prior Art 2 mentioned earlier.

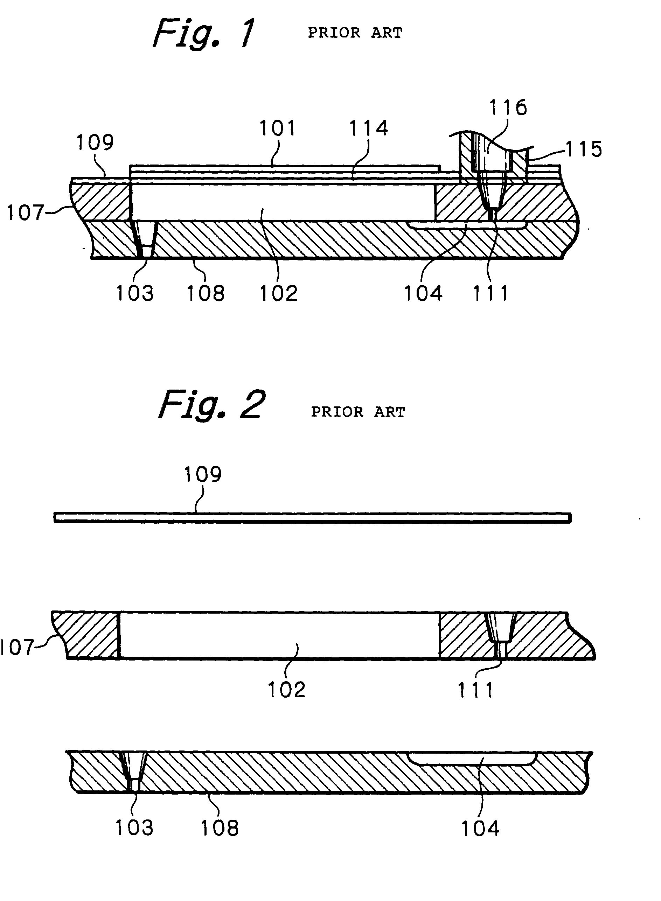

FIG. 1 shows an ink jet head disclosed in Prior Art 1. As shown, the ink jet head includes a pressure chamber forming plate 107, a vibration plate 109 mounted on one side of the plate 107, and a nozzle plate 108 mounted on the other side of the plate 107 and formed with a nozzle 103. The three plates 107, 109 and 108 form a pressure chamber 102 in combination. An ink passageway 111 extends throughout the pressure chamber forming plate 107 perpendicularly to the general plane of the plate 107. The ink passageway 111 is communicated to the pressure chamber 102 via a passageway 104 formed in the nozzle plate 108. A chamber 116 is formed in an ink reservoir 115 and communicated to the ink passageway 111. In practice, a plurality of pressure chambers 102 are formed in the plate 107 side by side in parallel to the plate 109. A Plurality of ink passageways each are communicated to one of the pressure chambers 102 at one end and to a single ink reservoir 116 at the other end.

The above ink jet head is produced by the following procedure. As shown in FIG. 2, the vibration plate 109, pressure chamber forming plate 107 and nozzle plate 108 are produced independently of each other, and each are implemented by a green sheet of zirconia. The plate 107 has the pressure chamber 102 formed by pressing and the ink passageway 111 formed by punching. The plate 108 has the nozzle 103 formed by pressing and the passageway 104. The three plates 109, 107 and 108 are stacked and then sintered. subsequently, a conductive paste is formed on the surface of the plate 107 at a position corresponding to the pressure chamber 102 and then baked to form an electrode 114. Then, a material for forming a piezoelectric device 101 is formed in the portion of the plate 107 corresponding to the-prcssure chamber 102 and then baked.

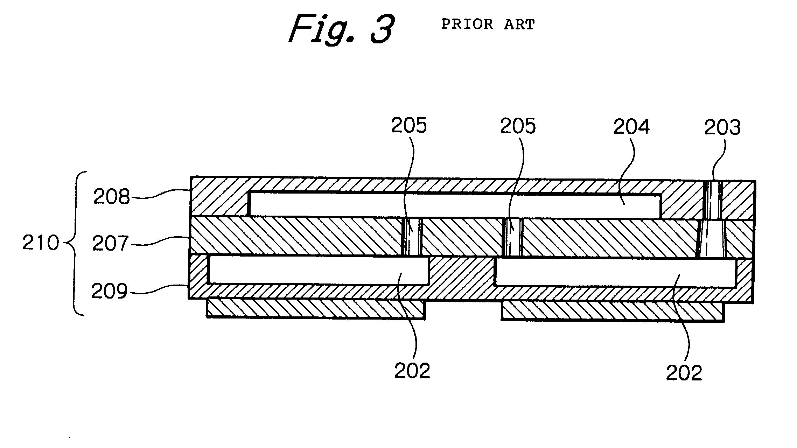

FIG 3 shows an ink jet head disclosed in Prior Art 2. As shown, the ink. jet head is implemented as *a* laminate 210 made up of a front substrate 207, an intermediate substrate 207. and a rear substrate 209 adhered to each other. A number of nozzles 203 (Only one is shown) are formed in the front substrate 208 side by side perpendicularly to the general plane of the substrate 208. Pressure chambers or grooves 202 are formed in the rear substrate 209 while over lapping the array of nozzles 203 from the right and left, and each is communicated to one of the nozzles 203. An ink chamber 204 is formed in the front substrate 208 for temporarily storing ink to be fed to the pressure chambers 202. Passageways 205 are formed in the intermediate substrate 207, and each provides communication between the ink chamber 204 and one of the pressure chambers 202.

Prior Art 1 and Prior Art 2 each has some problems left unsolved, as discussed earlier.

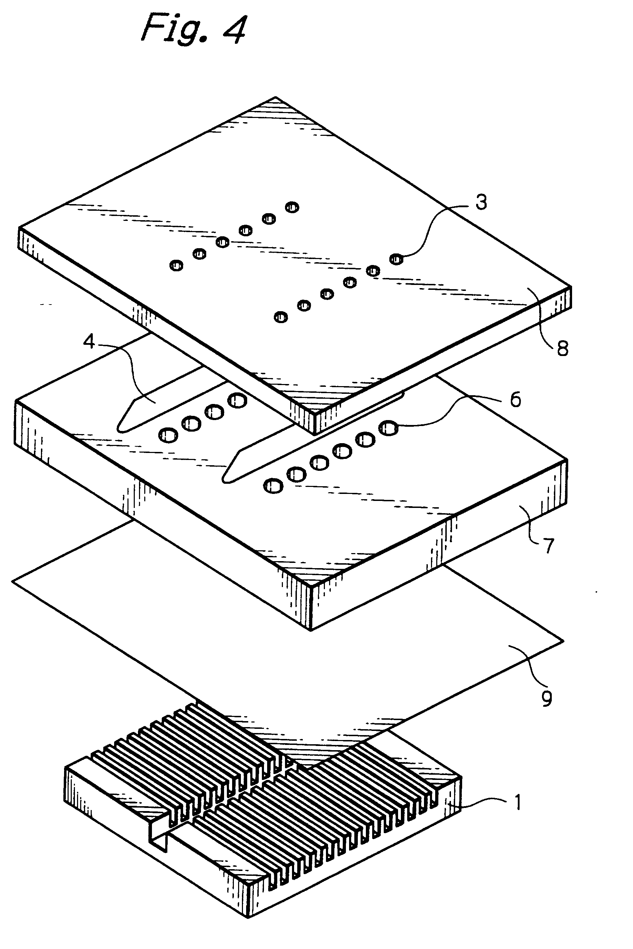

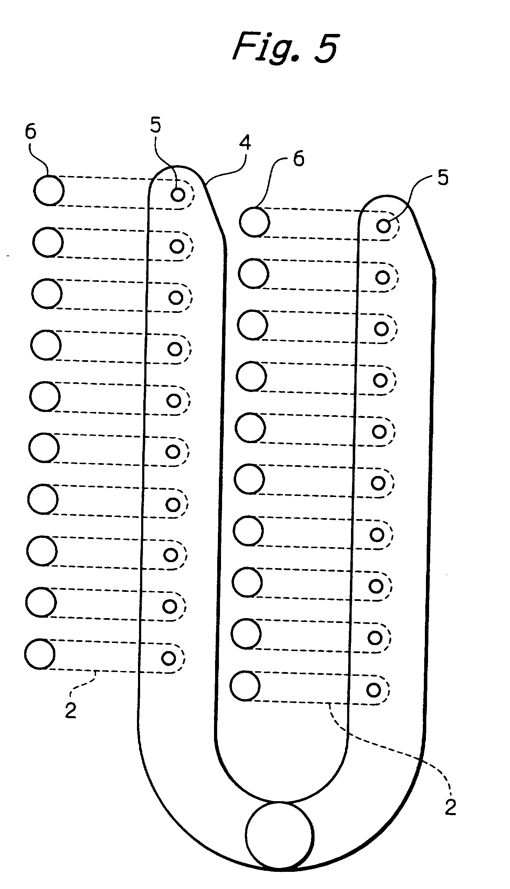

Referring to FIGS. 4 and 5, an ink jet head embodying the present invention will be described. As shown, the ink jet head is implemented as a laminate made up of a nozzle plate 8, a head chip 7, a vibration plate 9, and a piezoelectric device 1. The nozzle plate 8 is an about 100 µm thick sheet of stainless steel or nickel and formed with a plurality of arrays of nozzles 3 by pressing or etching. Each nozzles 3 has a diameter of about 25 µm to about 35 µm. If desired, the nozzle plate 3 may be formed by electroforming.

For the head chip 7, use is made of a photosensitive glass sheet implemented by a photosensitive material capable of being etched to form recesses in a desired pattern and turning out ceramics when heated or otherwise treated. For example, the glass sheet may be implemented by silicate glass melted together with metal ions and sensitizer. When such silicate glass is heated (developed) by ultraviolet rays under adequate conditions, a metal colloid appears in the illuminated portions, and then crystals grow around the colloid in the same portions. These portions are easy to melt. On the other hand, when the silicate glass is bodily heated under conditions different from the above conditions, it turns out glass ceramics physically and chemically durable and not sensitive to light. With this principle, the illustrative embodiment forms a groove pattern in the head chip 7 with dimensional accuracy as high as one available with ultraviolet writing.

The head chip 7 is formed with an ink pool 4 in one major surface thereof facing the nozzle plate 8 and a plurality of pressure chambers 2 (see FIG. 5) in the other major surface facing the vibration plate 9. The pressure chambers 2 respectively correspond in position to the nozzles 3. Further, the head chip 7 is formed with through passageways 6 respectively aligned with the nozzles 3 and feed holes 5 respectively communicated to the pressure chambers 2.

The positional relation between the ink pool 4, the pressure chambers 2, through passageways 6 and feed holes 5 will be described with reference to FIG. 5. As shown, the through passageways 6 are formed in a plurality of arrays corresponding to the arrays of the nozzles 3. The passageways 6 and nozzles 3 in each array are shifted from the through passageways 6 and nozzles 3 in the next array in the direction of arrays by a natural multiple of one dot determined by the resolution of a printer. The ink pool 4 has parallel portions parallel to the arrays of the through passageways 6 and merging into each other at the outside of the range where the through passageways 6 exist, as illustrated.

The pressure chambers 2 are implemented as grooves respectively communicated to the through passageways 6 and extending perpendicularly to the arrays of the passageways 6. The ink pool 4 and pressure chambers 2 partly overlap each other. The ink pool 4 is communicated to the pressure chambers 2 by the feed holes 5.

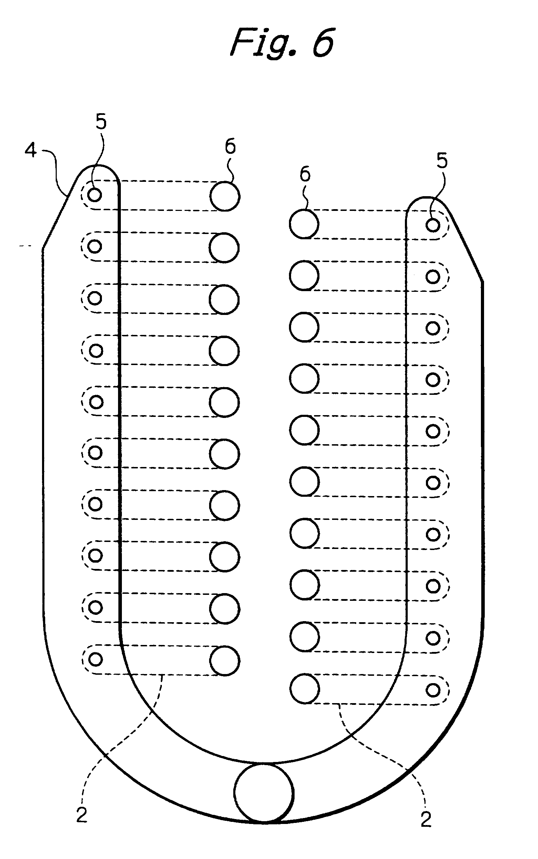

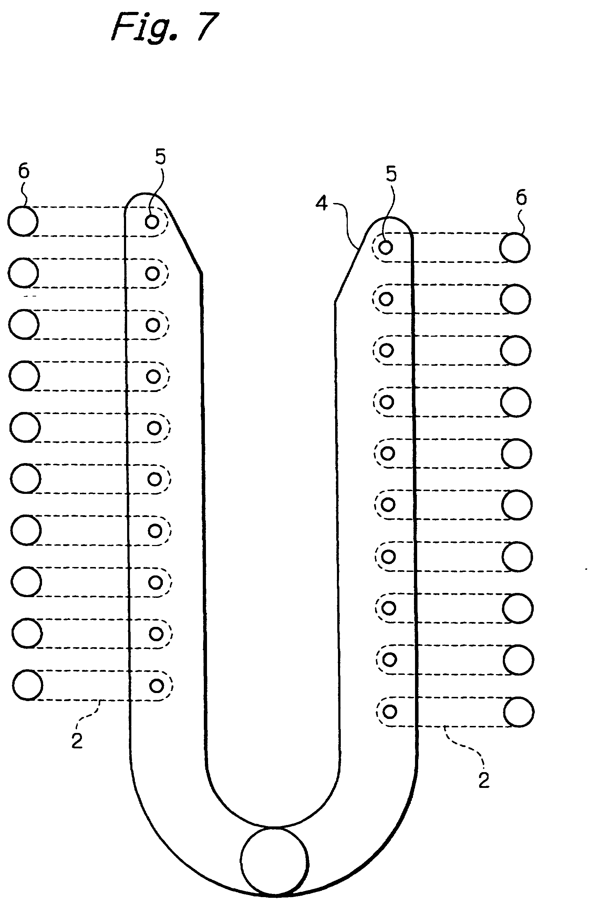

FIGS. 6 and 7 show another specific relation between the pressure chambers 2, feed holes 5, ink pool 4 and through passageways 6 formed in the head chip 7.

Referring again to FIG. 4, the vibration plate 9 is about 10 µm to 30 µm thick and formed of stainless steel, nickel or similar metal or a polyimide and metal mixture.

The piezoelectric device 1 mainly consists of zirconic acid lead titanate, magnesium lead neobate, nickel lead neobate, zinc lead neobate, manganese lead neobate, antimony lead stannate, or lead titanate. To form the piezoelectric device 1, the piezoelectric material and electrodes are stacked alternately and then baked. The baked stack is grooved and thereby divided into drive portions respectively corresponding to the pressure chambers 2. Also, the based stack is formed with electrodes for driving the drive portions independently *of* each other. The drive portions each are caused to deform by a drive signal applied to the respective electrode, causing the portion of the vibration plate 8 corresponding to desired one of the pressure chambers 2 to deform. The stacking direction of the piezoelectric device 1 is identical with the direction in which the vibration plate 9 vibrates due to the longitudinal effect.

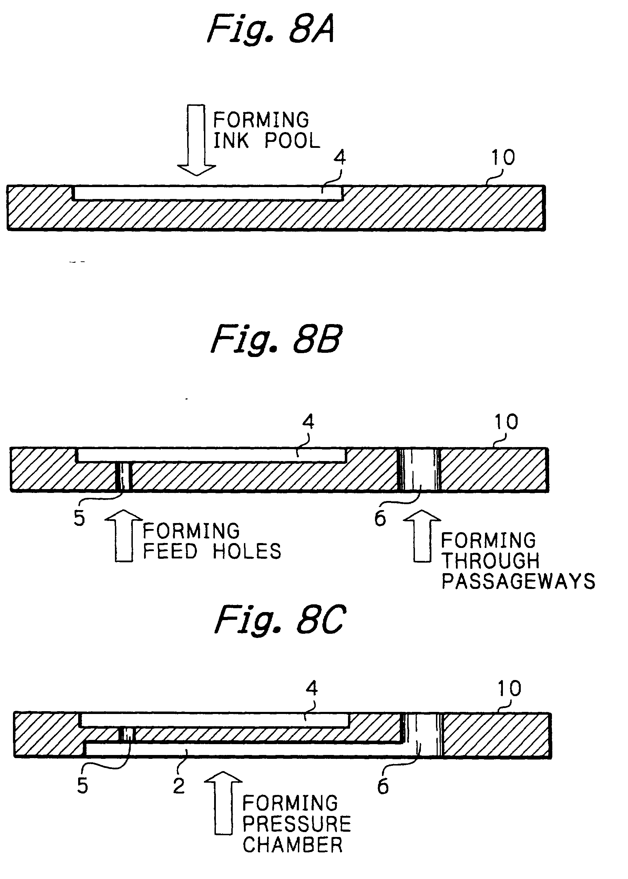

FIGS. 8A-8c demonstrate a procedure for producing the above ink jet head. First, there is prepared a photosensitive glass sheet 10 implemented by silicate glass melted together with metal ions and sensitizer. Both sides of the glass sheet 10 are ground in a preprocessing step.

As shown in FIG. 8A, the ink pool 4 is formed in the ground glass sheet 10 by sand blasting (first step). Specifically, after a fiat metallic mask formed with a hole corresponding to the ink pool 4 has been positioned on one major surface of the glass sheet 10, sand blasting is effected to form the ink pool 4. The glass sheet 10 with the ink pool 4 is cleaned.

Subsequently, as shown in FIG. 8B, the feed holes 5 and through passageways are formed in the glass sheet 10 by through etching effected from the other major surface of the glass sheet 10 (second step). Specifically, after a mask for masking the glass sheet 10 other than the portions expected to form the feed holes 5 and through passageways 6 has been positioned on the glass sheet 10, ultraviolet rays are radiated to form a latent image in the glass sheet 10. As a result, the glass sheet 10 is exposed over its entire thickness.

The exposed glass sheet 10 is heated to crystallize the exposed portions (latent image) and thereby make them easy to melt in an acid. Specifically, when the glass sheet 10 is heated at a high temperature above the glass transition temperature, metal atoms gather and precipitate a colloid. As the glass sheet 10 is continuously heated at a slightly higher temperature, fine crystals grow around the metal colloid in the exposed portions, The precipitated crystals are lower in chemical durability than the glass and easily melts in a solution of low density hydrofluoric acid or similar acid. All the crystallized portions are melted and removed (etching) to form the feed holes 5 and through passageways 6 in the glass sheet 10. Then, the glass sheet 10 is cleaned in a postprocessing step.

As shown in FIG. 8C, the glass sheet 10 formed with the feed holes 5 and through passageways 6 is subjected to half-etching for forming the pressure chambers 2 (third step). Specifically, a mask for masking the surface of the glass sheet 10 opposite to the surface with the ink pool 4 except for portions expected to form the pressure chambers 2 is positioned on the above surface. Then, ultraviolet rays are radiated to form a latent image representative of the pattern of the pressure chambers 2 in the glass.

The half-etched glass sheet 10 is heated to cause the exposed portions (latent image) to crystallize and thereby make them easy to melt in an acid. Further, ultraviolet rays are radiated to the unexposed portions of the glass sheet 10, so that the unexposed portions are ready to turn out ceramics. The crystallized portions are melted and removed (etching from the surface opposite to the surface formed with the ink pool 4. The depth of the pressure chambers 2 is variable on the basis of the etching time.

The above glass sheet 10 is heated to form ceramics. The glass sheet 10 is cleaned and, if necessary, has its portions expected to contact the other parts ground. This produces the head chip 7 formed of glass ccramics which is not sensitive to light, but durable both physically and chemically.

Next, the nozzle plate 8 with the nozzles 3 is adhered to the surface of the glass sheet 10 where the ink pool 4 is present (fourth step). Subsequently the vibration plate 9 is adhered to the surface of the head chip 7 where the pressure chambers 2 are present (fifth step). Finally, the piezoelectric device 1 is adhered to the vibration plate 9 with its drive portions accurately aligned with the pressure chambers 2 (sixth step).

It has been customary with an ink jet head to pattern (etching, pressing or laser machining) an ink pool forming plate, a passageway forming plate and a pressure chamber forming plate each having a particular width one by one and then stack and adhere the plates together. Such a conventional procedure causes an ink pool, passageways and pressure chambers to be deviated from each other by about 10 µm. By contrast, the illustrative embodiment forms the ink pool 4, feed holes 5 and pressure chambers 2 by sequentially positioning the masks on a single photosensitive glass sheet 10. Therefore, a positional error between the ink pool 4, feed holes 5 and pressure chambers 2 is as small as about 5 µm ascribable merely to the positions of the masks.

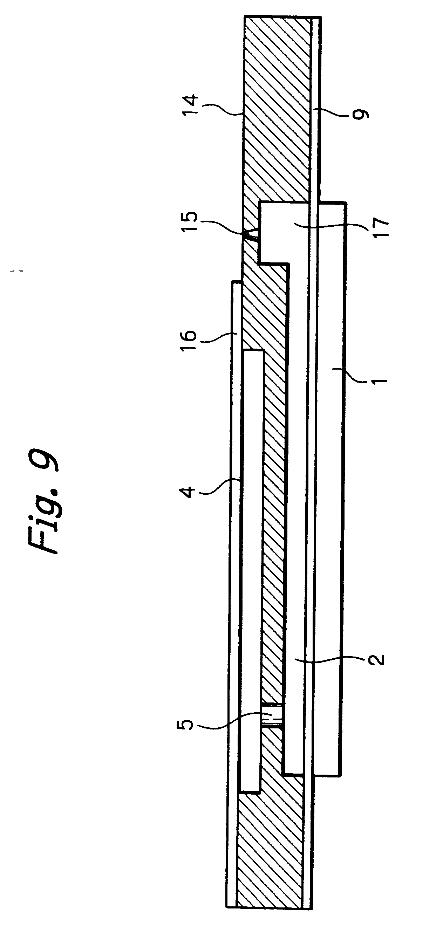

Reference will be made to FIG. 9 for describing an alternative embodiment of the present invention. As shown, an ink jet head includes a head chip 14 formed not only with the ink pool 4, feed holes 5 and pressure chambers 2 but also with nozzles 15. A cover 16 which is a simple plate covers the ink pool 4. specifically, bores 17 each are communicated to one of the pressure chambers 2. Each bore 17 extends toward the major surface of the head chip 14 where the ink pool 4 is present, but does not extends throughout the head chip 14. The nozzles 15 are respectively formed in the bottoms of the bores 17. The cover 16 is formed of metal or resin and adhered to the head chip 14.

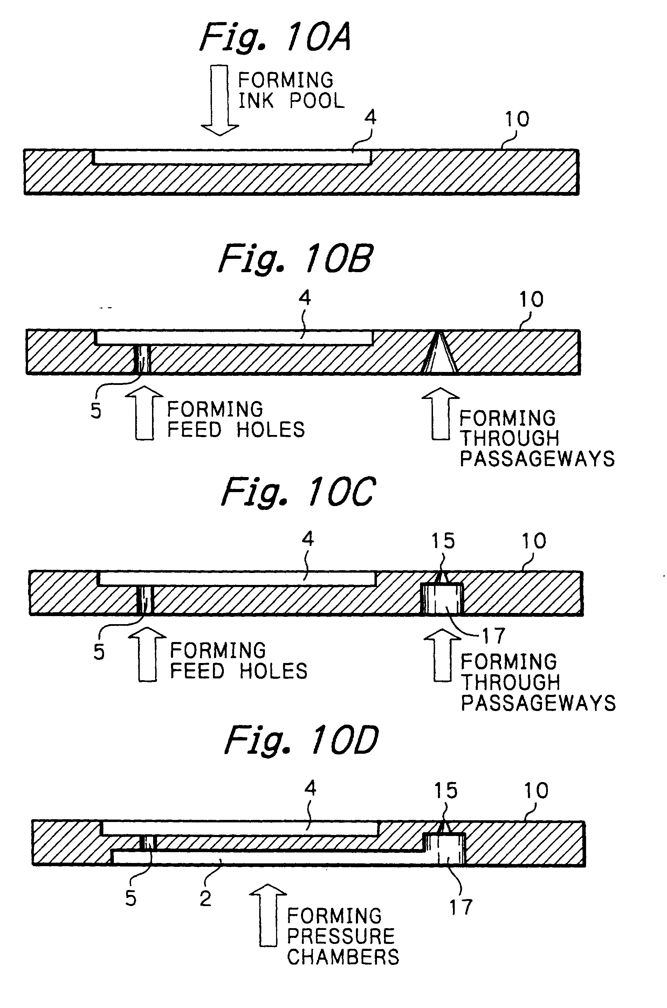

FIGS. 10A-10D demonstrate a procedure for producing the ink jet head shown on FIG. 9. As shown in FIG. 10A, the ink pool 4 is formed in the glass sheet 10 by sand blasting in the same manner as in the previous embodiment (first step). As shown in FIG. 10B, after a mask for masking the other major surface of the glass sheet 2 except for the portions expected to form the feed holes 5 and bores 17 has been positioned on the above surface, beams converging into the glass sheet 10 via the pattern of the bores 17 are emitted to the glass sheet 10 (second step), The beams are caused to focus on the positions of the glass sheet 10 expected to form the nozzles 15. If desired, the *focuses* of the beams on the glass sheet 10 may be adjusted independently of each other during radiation. Ultraviolet rays sequentially converging into the glass sheet via the through hole pattern expose a conical portion. The conical portion is etched in order to form a conical through bore including a nozzle.

As shown in FIG. 10C, after a mask for masking the surface of the glass sheet opposite to the surface with the ink pool 4 except for the portions expected to form the bores 17 has been positioned on the above surface, parallel beams are emitted to the portions of the glass sheet 10 where the bores 17 are present. This is followed by half-etching. At this instant, an etching time capable of providing each bore 17 with *a* preselected depth when combined with the etching time of a fourth step to follow is selected.

As shown in FIG. 4D, the third step of the previous embodiment is repeated to form the pressure chambers (fourth step). This is also followed by the fourth to sixth steps of the previous embodiment to complete an ink jet head.

In the second step of the procedure shown in FIGS. 4A-4D, ultraviolet rays may be radiated after a mask for masking the surface of the glass sheet 10 opposite to the surface with the ink pool 4 except for the portions expected to form the feed holes 5 and nozzles 15 has been positioned an the above surface. In this case, ultraviolet rays converged via a lens will be radiated to the individual nozzle portion. Again, the ultraviolet rays are focused at the positions for forming the nozzles 15.

Further, the second step may be modified as follows. First, a mask for masking the surface of the glass sheet 10 opposite to the surface with the ink pool 4 except for the portions expected to form the feed holes 5 and nozzles 15 is positioned on the above surface in order to form through holes identical in diameter with the nozzles 15. Subsequently, beams converging into the glass sheet 10 via the pattern of the bores 17 are emitted via a mask in order to form the conical portions. This easily provides the nozzles with the same diameter.

In the configuration shown in FIG. 9, both the nozzles 15 and bores 17 are formed in the head chip 14 and therefore accurately aligned with each other. In addition, such a configuration prevents adhesive from bulging out between the nozzles 15 and the pressure chambers 2 and enhances the accuracy of the ink jet head.

Blocks of ink passageways each assigned to a particular color may be molded integrally with each other. A molding is more efficient and more accurate than color-by-color blocks adhered to each other.

The feed holes, through passageways and bores may not extend perpendicularly to the general plane of the substrate. Also, the piezoelectric device may be positioned perpendicularly to the direction in which the other members are stacked, in which case the transverse effect is available with the piezoelectric device. In 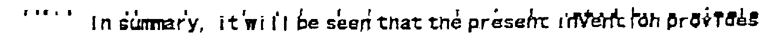 a method of producing an ink jet head having various unprecedented advantages, as enumerated below.
(1) A single substrate is formed with an ink pool, pressure chambers, feed holes, and through passageways. The substrate therefore implements a low cost, high yield ink jet head capable of being highly integrated without resorting to high positioning accuracy.
(2) A tapered, curved or similar complicate fine configuration is achievable by etching.
(3) Generally, a photosensitive glass sheet is exposed over its entire thickness in accordance with the shape of light radiated thereto, In accordance with the present invention, an ink pool having any desired shape can-be formed on one surface of the glass substrate without regard to the configuration of the other surface including an ink pool pattern. In addition, the head can be produced at low cost with a sufficient necessary degree of dimensional accuracy.
(4) A shape formed by a certain step is not subjected to any treatment later. The substrate can therefore be produced easily and accurately.
(5) A single substrate is formed with nozzles in addition to an ink pool, pressure chambers, feed holes, and through passageways, The substrate therefore implements a low cost, high yield-ink jet head capable of being highly integrated without resorting to high positioning accuracy.
(6) Nozzles are formed by etching and can therefore be as fine as about 20 µm to 30 µm.
(7) Nozzles flaring toward the passageways can be easily formed.

Various modifications will become possible for those skilled in the art after receiving the teachings of the present disclosure without departing from the scope thereof.

## Claims

1. A method of producing an ink jet head including a substrate formed with an ink pool in one major surface thereof, a plurality of pressure chambers in the other major surface thereof, a plurality of feed holes respectively extending from said ink pool to said plurality of pressure chambers, and a plurality of through passageways respectively extending from said plurality of pressure chambers throughout said substrate, said method comprising:
etching a single photosensitive glass ceramics substrate to thereby form the pressure chambers, the feed holes, and the through passageways; and
heating the substrate to transform photosensitive glass ceramics of said substrate to ceramics.

2. A method as claimed in claim 1, further comprising forming the ink pool by other way than using radiation of light.

3. A method as claimed in claim 2, wherein forming the ink pool is executed by sand blasting.

4. A method as claimed in claim 1 or 2, wherein etching step comprises forming the through passageways and the feed holes after forming the ink pool, and then forming the pressure chambers.

5. A method as claimed in any of claims 1-4, wherein forming the pressure chambers is executed by half-etching.

6. A method of producing an ink jet head including a substrate formed with an ink pool in one major surface thereof, a plurality of pressure chambers in the other major surface thereof, a plurality of feed holes respectively extending from said ink pool to said plurality of pressure chambers, a plurality of nozzles formed in said one major surface, and a plurality of through passageways respectively extending from said plurality of pressure chambers to said plurality of nozzles, said method comprising:
etching a single photosensitive glass ceramics substrate to thereby form the pressure chambers, the feed holes, the nozzles, and the through passageways: and
heating the substrate to transform photosensitive glass ceramics of said substrate to ceramics.

7. A method as claimed in claim 6, further comprising forming the ink pool by other way without using radiation of light.

8. A method as claimed in claim 6 or 7, wherein etching step comprises forming the through passageways and the feed holes after forming the ink pool, and forming the pressure chambers thereafter.

9. A method as claimed in any of claims 6 to 8, wherein forming said nozzles comprises sing the substrate.

10. A method as claimed in claim 9, wherein:
exposing the substrate comprises exposing the substrate with focused rays:
etching the substrate to form conical through bores including said nozzles; and
forming a plurality of through passageways respectively extending from said plurality of pressure chambers to said plurality of nozzles by half-etching.

11. A method of producing an ink jet, comprising :
forming an ink pool in one major surface of a photosensitive glass ceramics substrate:
forming a plurality of pressure chambers in the other major surface of said substrate by etching said substrate:
forming a plurality of feed holes respectively extending from said ink pool to said plurality of pressure chambers by etching said substrate:
forming a plurality of through passageways respectively extending from said plurality of pressure chambers throughout said substrate by etching said substrate; and
heating the substrate to transform photosensitive glass ceramics of said substrate to ceramics.

12. A method as claimed in claim 11, wherein forming said ink pool is executed by other way than using radiation of light.

13. A method as claimed in claim 11 or 12, wherein forming the ink pool is executed by sand blastings.

14. A method as claimed in any of claims 11-12, wherein etching step comprises forming the through passageways and the feed holes after forming the ink pool, and then forming the pressure chambers.

15. A method as claimed in any of claims 11-14, wherein forming the pressure chambers is executed by half-etching.

16. A method of producing an ink jet head, comprising:
forming an ink pool in one major surface of a photosensitive glass ceramics substrate:
forming a plurality of pressure chambers in the other major surface of said substrate by etching said substrate:
forming a plurality of feed holes respectively extending from said ink pool to said plurality of pressure chambers by etching said substrate:
forming a plurality of nozzles formed in said one major surface by etching said substrate;
forming a plurality of through passageways respectively extending from said plurality of pressure chambers to said plurality of nozzles by etching said substrate; and
heating the substrate to transform photosensitive glass ceramics of said substrate to ceramics.

17. A method as claimed in claim 16, wherein forming the ink pool is executed by other way than using radiation of light.

18. A method as claimed in claim 16 or 17, wherein forming the through passageways and the feed holes is executed after forming the. ink pool, and forming the pressure chambers is executed thereafter.

19. A method as claimed in any of claims 16 to 18, wherein:
forming said nozzles comprises exposing the substrate comprises exposing the substrate with focused rays, and etching the substrate to form conical through bores including said nozzles; and
forming a plurality of through passageways is executed by half-etching to form said through passageways respectively extends from said plurality of pressure chambers to said plurality of nozzles.
